# EUROPEAN PATENT SPECIFICATION

(11) **EP 2 183 341 B1**
(45) Date of publication and mention of the grant of the patent: **05.11.2014**
(21) Application number: 07837010.3
(22) Date of filing: 17.08.2007
(51) Int. Cl.: C10L 1/18, C10L 1/08

(54) **ENERGY EFFICIENT PROCESS TO PRODUCE BIOLOGICALLY BASED FUELS**
ENERGIEEFFIZIENTES VERFAHREN ZUR HERSTELLUNG VON BRENNSTOFFEN AUF BIOLOGISCHER BASIS
PROCÉDÉ À RENDEMENT ÉNERGÉTIQUE ÉLEVÉ DESTINÉ À PRODUIRE DES BIOCARBURANTS

(43) Date of publication of application: 12.05.2010
(73) Proprietor: Energy & Environmental Research Center Foundation, Grand Forks, North Dakota 58202 (US)
(72) Inventor: AULICH, Ted, R., Grand Forks, North Dakota 58201 (US); WOCKEN, Chad, A., Grand Forks, North Dakota 58201 (US); TIMPE, Ron, C., Grand Forks, North Dakota 58201 (US); PANSEGRAU, Paul, Grand Forks, North Dakota 58201 (US)
(74) Representative: Whitfield, Gillian Janette
(86) International application number: PCT/US2007/018300
(87) International publication number: WO 2009/025635

(56) References cited:
- EP-A1- 1 693 432
- WO-A2-2006/075057
- WO-A2-2007/027955
- US-A1- 2004 074 760
- US-A1- 2006 161 032
- US-B1- 6 712 867
- SHAY ET AL: "Diesel fuel from vegetable oils: Status and opportunities", BIOMASS AND BIOENERGY, PERGAMON, vol. 4, no. 4, 1 January 1993 (1993-01-01) , pages 227-242, XP023645020, ISSN: 0961-9534, DOI: 10.1016/0961-9534(93)90080-N [retrieved on 1993-01-01]
- BUTNARK: 'Thermally stable coal-based jet fuel chemical composition' THERMAL STABILITY PHYSICAL PROPERTIES AND THEIR RELATIONSHIPS, [Online] December 2003, THE PENNSYLVANIA STATE UNIVERSITY LIBRARY, Retrieved from the Internet: <URL:http://etda.libraries.psu.edu/theses/a pproved/WorldWideFiles /ETD-411/sbutnark .pdf> [retrieved on 2007-12-20]

## Description

### BACKGROUND

This invention relates to a process for producing fuels. More specifically, the invention relates to an energy efficient process of producing jet fuels utilizing biological fatty acid sources.

Alkyl esters, including methyl ester or ethyl ester, also known as "biodiesel", are a renewable and clean burning alternative to conventional petroleum-derived diesel fuel. Biodiesel is made from a raw or used vegetable oil or animal fat, typically soybean oil or rapeseed oil (which are composed of triglycerides, diglycerides, monoglycerides, fatty acids (FA), or combinations thereof). Because biodiesel is made from natural oil or fat sources, the alkyl esters typically comprise C₁₄ to C₁₈ fatty chains if derived from vegetable oil, and C₁₆ to C₂₂ fatty chains if derived from animal fat. Biodiesel can be combusted in diesel (combustion-ignition) engines either in pure form or as blended with petroleum-derived diesel fuel. Biodiesel provides the benefits of a renewable resource as well as providing lower sulfur emissions than petroleum diesel.

A common route to produce biodiesel from biologically derived oils is through a process called transesterification. A common transesterification process is illustrated below. 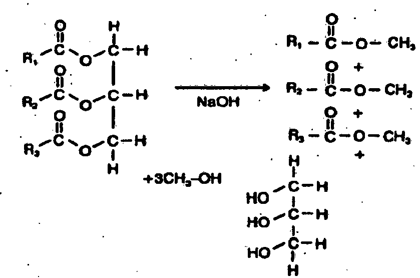 However, biodiesel produced by this process typically does not meet transportation diesel requirements, *e.g.,* these esters typically gel below -10°C. For improved performance, thermal and catalytic chemical bond-breaking (cracking) technologies have been developed than tenable converting bio-oils into bio-based alternatives to petroleum-derived diesel fuel and other fuels, such as jet fuel.

Cleaving FA chains from glycerol and cracking longer FA chains into shorter (lower- carbon-number) molecules are used to ensure adequate fuel flow performance at low (down to - 50°C) temperatures, oxygen removal is required to ensure adequate fuel energy density, and replacement of oxygen with hydrogen is required to ensure fuel chemical stability (resistance to polymerization). Because additional energy input is required to crack C16 and C18 FA chains (which comprise the primary FA constituents of soybean, sunflower, corn, rapeseed, canola, cottonseed, and other common vegetable oils) into shorter molecules, the overall energy efficiency of such a process is diminished.

WO 2007/027955 discloses a method for preparing a hydrocarbon product, comprising the steps of: a) performing thermal decarboxylation on a feedstock comprising fatty acids in the C10-20 range, to form a thermal decarboxylation product stream; b) combining the thermal decarboxylation product stream with an olefin- containing material substantially in the C2-8 range to form a reaction mixture; and c) subjecting the reaction mixture to molecular averaging to form a hydrocarbon product; wherein if the thermal decarboxylation product is saturated, a dehydrogenation step is performed on the thermal decarboxylation product before the molecular averaging step is performed.

Consequently, there is a need for a more energy efficient method of producing fuels from biological sources such as natural oils and fats.

### BRIEF SUMMARY

A novel, energy efficient process of producing jet fuel is disclosed herein. The process is based on utilizing a medium chain fatty acid source such as cuphea oil, which precludes the need for high-energy fatty acid chain cracking to achieve the shorter molecules needed for jet fuels and other fuels with low-temperature flow requirements. Other aspect and advantages of the process will be described in more detail below.

In an embodiment, a process for producing a jet fuel comprises:
a)providing a medium chain fatty acid source comprising glycerides having one or more medium chain fatty acid groups with no more than 16 carbon atoms, in which each fatty acid group has no more than 16 carbon atoms in the primary fatty acid chain;
b) cleaving the one or more medium chain fatty acid groups from the glycerides to form glycerol and one or more free fatty acids;
c) reducing glycerol to form proane, propanol, propanediol, or combinations thereof;
d)decarboxylating the one or more fatty acids to form one or more hydrocarbons; and
e) distilling the one or more hydrocarbons for the production of the jet fuel.

The foregoing has outlined rather broadly the features and technical advantages of embodiments of the invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other structures for carrying out the same purposes of the invention. It should also be realized by those skilled in the art that such equivalent constructions do not depart from the spirit and scope of the invention as set forth in the appended claims.

### BRIEF DESCRIPTION OF THE DRAWINGS

For a detailed description of the preferred embodiments of the invention, reference will now be made to the accompanying drawings in which:
Figures 1A-B illustrating an embodiment of the disclosed process;
Figure 2A is an idealized chromatogram of showing a mixture of normal alkanes in a jet fuel such as JP-8 jet fuel;
Figure 2B is a chromatogram of JP-8 jet fuel showing that it.primarily comprises C6 though C16 hydrocarbons; and
Figure 3 is a block diagram illustrating an embodiment of a process for the production of a fuel such as JP-8 jet fuel.

### NOTATION AND NOMENCLATURE

Certain terms are used throughout the following description and claims to refer to particular system components. This document does not intend to distinguish between components that differ in name but not function.

In the following discussion and in the claims, the terms "including" and "comprising" are used in an open-ended fashion, and thus should be interpreted to mean "including, but not limited to...".

As used herein, "jet fuel" may refer to any composition used as fuel in jet-engined aircraft.

### DETAILED DESCRIPTION OF THE PREFERRED EMBODIMENTS

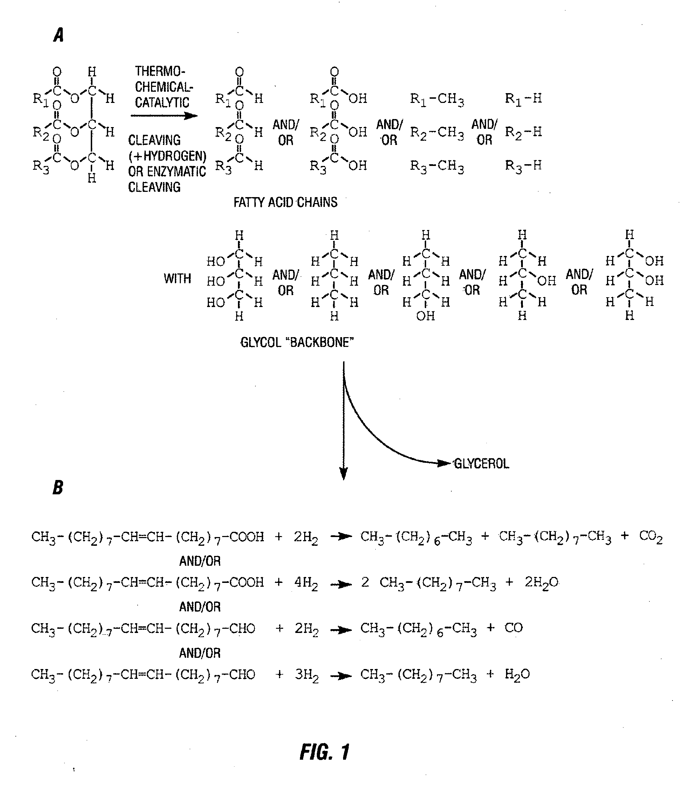

FIGURES 1A-B illustrate an embodiment of a method of producing a liquid fuel such as jet fuel. Generally, the feedstock mixture (*e.g*. a natural fatty acid source such as natural plant or vegetable oils and/or fats) may be subjected to the following processing steps either sequentially, or in tandem, or simultaneously, such that the operations are achieved in no particular order. In embodiments, a fatty acid (FA) source may initially be provided. The fatty acid source is then disassembled or cleaved into FA chains and glycerol as shown in Figure 1A. The FA chains may then be separated from the glycerol. Ultimately, the FA chains may be decarboxylated to form one or more hydrocarbons and, potentially if required, any unsaturated hydrocarbon chains may be hydrogenated to produce one or more alkanes for the desired jet fuel as shown in Figure 1B.

An innovative aspect of the disclosed methods is the production of bio-based jet fuel by first selecting natural oils comprised of FA chains of lengths corresponding to the desired fuel product. That is, a mixture of normal and isomerized alkanes may be produced that matches the carbon chain mixture of existing jet fuel types. Typically, jet fuel comprises a mixture of hydrocarbons having from 8 to 16 carbon atoms with traces of C6 - C8 as well as traces of C 17 and higher. Preferably these traces are less than 10%, even more preferably less than 5%. Thus, it is desirable to select fatty acid sources having fatty acid composition with the same or substantially similar numbers of carbon atoms, or the same or substantially similar molecular weight distribution as the ultimate jet fuel product (*e.g.* JP-4, JP-5, JP-6, JP-7, JP-8, Jet A1, Jet A, Jet B, kerosene, etc.).

Preferably, a medium chain fatty acid source is provided as feedstock for the method. As used here, "medium chain fatty acids" refer to saturated or unsaturated fatty acid groups having no more than 16 carbon atoms in the primary fatty acid chain. Examples of medium chain fatty acids include without limitation, caproic acid (C6), caprylic acid (C8), capric acid (C10) and lauric acid (C12). A medium chain fatty acid source refers to biologically derived or natural oils or a blend of oils comprising glycerides having medium chain fatty acid groups. The glycerides may be monoglycerides, diglycerides, triglycerides, or combinations thereof. Accordingly, embodiments of the method eliminate the need for the high-energy input requirements cracking of C16, C18, and longer FA chains into shorter hydrocarbons.

In an embodiment, the medium chain fatty acid source may be cuphea oil. The cuphea oil may be a blend of oils obtained from the four *Cuphea* flowering plant species: *Cuphea lanceolata, Cuphea carthagenensis, Cuphea epilobiifolia,* and *Cuphea strigulosa.* Additionally, the medium chain fatty acid source may include without limitation, coconut oil, palm oil, almond oil, canola oil, cocoa butter oil, corn oils, cotton seed oil, flaxseed oil, grape seed oil, olive oil, palm kernel, peanut oil, safflower oil, sesame oil, soybean oil, sunflower oil, walnut oil, or combinations thereof The FA composition of each of these oils is listed in Tables 1 and 2. The medium chain fatty acid source may also, in some embodiments, be derived from genetically modified plant sources. In a further embodiment, the medium fatty acid source may be algae oil. The algae oil may be derived from any species of algae. Alternatively, the algae oil may be derived from a genetically modified species of algae.

The oil blend, after undergoing the aforementioned processing steps, may provide a product mixture of normal paraffins corresponding to the hydrocarbon composition of typical jet fuels such as JP-8 and/or molecular weight distribution representative. Alternatively, fatty acid sources from animal or fish sources may be blended with cuphea-derived oil. The FA composition of selected fatty acid sources from this group is listed in Table 3.

**Table 1. Fatty Acid Composition (as % of total fatty acids) of Selected Cuphea Species**

| **Species** | **C8** | **C10** | **C12** | **C14** | **C16 and Others** |
|---|---|---|---|---|---|
| *Cuphea lanceolata* | 88 | *2* | 1 | 9 | 0 |
| *Cuphea carthagenensis* | *5* | 81 | 5 | 9 | 0 |
| *Cuphea epilobiifolia* | <1 | 20 | 68 | 12 | 0 |
| *Cuphea strigulosa* | 1 | 18 | 14 | 45 | 22 |

**Table 2. Fattv Acid Composition of Selected Oil Producing Plants**

| **SOURCE** | **C8** | **C10** | **C12** | **C14** | **C16** | **C18** | **C18:1** | **C18:2** | **C18:3** |
|---|---|---|---|---|---|---|---|---|---|
| ALMOND | 0 | 0 | 0 | 0 | 7 | 2 | 69.0 | 17 | 0 |
| CANOLA OIL | 0 | 0 | 0 | 0 | 4 | 2 | 62.0 | 22 | 10 |
| COCOA BUTTER | 0 | 0 | 0 | 0 | 25 | 38 | 32.0 | 3 | 0 |
| COCONUT OIL | 0 | 6 | 47 | 18 | 9 | 3 | 6.0 | 2 | 0 |
| CORN OIL | 0 | 0 | 0 | 0 | 11 | 2 | 28.0 | 58 | 1 |
| COTTONSEED OIL | 0 | 0 | 0 | 1 | 22 | 3 | 19.0 | 54 | 1 |
| FLAXSEED OIL | 0 | 0 | 0 | 0 | 3 | 7 | 21.0 | 16 | 53 |
| GRAPE SEED OIL | 0 | 0 | 0 | 0 | 8 | 4 | 15.0 | 73 | 0 |
| OLIVE OIL | 0 | 0 | 0 | 0 | 13 | 3 | 710 | 10 | 0 |
| PALM OIL | 0 | 0 | 0 | 1 | 45 | 4 | 40.0 | 10 | 0 |
| PALM OLEIN | 0 | 0 | 0 | I | 37 | 4 | 46.0 | 11 | 0 |
| PALM KERNAL OIL | 0 | 4 | 48 | 16 | 8 | 3 | 15.0 | 2 | 0 |
| PEANUT OIL | 0 | 0 | 0 | 0 | 11 | 2 | 48.0 | 32 | 0 |
| SAFFLOWER OIL | 0 | 0 | 0 | 0 | 7 | 2 | 13.0 | 78 | 0 |
| SESAME OIL | 0 | 0 | 0 | 0 | 9 | 4 | 41.0 | 45 | 0 |
| SOYBEAN OIL | 0 | 0 | 0 | 0 | 11 | 4 | 24.0 | 54 | 7 |
| SUNFLOWER OIL | 0 | 0 | 0 | 0 | 7 | 5 | 19.0 | 68 | 1 |

**Table 3. Fatty Acid Composition of Selected Animal Oils.**

| **SOURCE** | **C8** | **C10** | **C12** | **C14** | **C16** | **C18** | **C18:1** | **C18:2** | **C18:3** |
|---|---|---|---|---|---|---|---|---|---|
| BEEF TALLOW | 0 | 0 | 0 | 3 | 24 | 19 | 43.0 | 3 | 1 |
| BEEF TALLOW | 0 | 0 | 0 | 3 | 24 | 19 | 43.0 | 3 | 1 |
| BUTTERFAT (COW) | 0 | 3 | 3 | 11 | 27 | 12 | 29.0 | 2 | 1 |

Blends of *Cuphea*-derived, vegetable-derived, animal, and also single-cell-derived oils may be utilized for the conversion of these blends to jet fuel. Additionally, oil from genetically modified sources may be used in blending suitable feedstocks. The oils listed in Tables 1, 2, and 3 are not to be considered inclusive, as oils both currently known and currently unknown may serve equally well as feedstocks for the spirit of this invention.

Once the appropriate medium chain fatty acid source has been selected, in the form of oils and blends, the fatty acid source may be processed to cleave the fatty acids from the glycerol backbone. The fatty acids may be cleaved from the glycerol using any methods and techniques known to one of skill in the art. Furthermore, the fatty acid group may be cleaved without a chemical change to the glycerol backbone. However, the fatty acids are preferably cleaved using a process such as for example, a thermochemical-catalytic process. As used herein, "thermochemical-catalytic process" is any process where the reactants are heated to initiate the reaction and additionally involves the use of one or more catalysts. One such thermochemical-catalytic process for cleaving fatty acids from a glycerol backbone is described in Myllyoja et al., U.S. Patent Application No. 11/477,922 ("Myllyoja"), herein incorporated by reference in its entirety. In one embodiment, the cleavage process involves a decarboxylation reaction as described in Myllyoja.

Alternatively, the process may comprise the disassembly of a medium chain fatty acid source from glycerol by decarboxylation of the FA chains while still attached to the glycerol backbone, thus simultaneously cleaving the fatty acid group and producing glycerol and one or more hydrocarbon products. The hydrocarbon product may therefore be one carbon shorter in chain length than the original FA.

In another embodiment, the FA chains may be reduced while still attached to the glycerol backbone, also producing glycerol and one or more hydrocarbon products. The hydrocarbon product may therefore comprise the same carbon length as the original FA coupled to the glyceride. The reduction is preferably performed in the presence of hydrogen and any suitable catalyst. In an additional embodiment, the fatty acid source may be disassembled by chemical reduction of the glycerol backbone, thereby producing propane, propanol, propanediol, other glycerol-derived products, or combinations thereof.

Catalysts which would be suitable for the conversion of natural fatty acid sources to normal hydrocarbons would be individual metals such as palladium, platinum, nickel, silver, gold, copper, or mixed or promoted metals, such as cobalt-molybdenum, nickel-molybdenum. The catalyst metal or mixed metals may be supported by carbon, silica, alumina, or other materials known to the art. In addition, the catalyst may be porous. The metal-support combination may be in the form or a powder or a formed extrudate. The extrudate may be shaped into any 3-dimensional shape. This list is not included to be inclusive, and other metals many function equally well as those listed here.

The conversion of the medium chain fatty acid source may be performed in the presence of the catalyst at temperatures from about 250°C to about 350°C, preferably about 280°C to about 320°C, but more preferably about 300°C. The conversion of the fatty acid source may be performed in the presence of hydrogen, preferably at a gauge pressure ranging from about 50 psig to about 200 psig, preferably ranging from about 75 psig to about 150 psig, more preferably from about 90 psig to about 125 psig. The catalyst is most preferably prepared for usage by pretreatment with hydrogen, resulting in reduction of the active metal. The reduction of catalyst is performed at an elevated temperature resulting in removal of water during the reduction step.

Alternatively, fatty acids may be cleaved by an enzymatic process such as the process described in U.S. Patent No. 4,394,445, herein incorporated by reference in its entirety for all purposes, or other biological processes known in the art. Examples of enzymes that may be used include without limitation, esterases, lipases, proteases, or combinations thereof. As used herein, "biological process" is any process utilizing biological organisms (*e.g.* bacteria, algae, etc.) to accomplish the desired reaction. In another embodiment, the fatty acids may be cleaved from the glycerol backbone by acid-catalyzed hydrolysis of the glycerides in the fatty acid source.

After cleavage of the fatty acids from the glycerol, the glycerol may be separated from the fatty acids. The separation may be accomplished by any suitable methods including without limitation, liquid-liquid extraction, supercritical solvent extraction; distillation, membrane filtration, acidulation, centrifugation, by gravity separation, or combinations thereof. Once separated from the fatty acids, the separated glycerol may be used for further reforming or other purposes.

Upon separation from glycerol, the fatty acids may then be processed to form the C8-C16 alkanes needed for jet fuel. In embodiments, the fatty acids may be deoxygenated or decartioxylated to form the desired alkanes. As with cleavage of the fatty acids from glycerol, the fatty acid deoxygenation may be accomplished using thermochemical-catalytic processes or biological processes. An example of a suitable thermochemical catalytic deoxygenation process is described in detail in Snåre, M., Kubickova, I., Mäki-Arvela, P., Eränen, K., Murzin, D. Yu., Continuous deoxygenation of ethyl stearate - a model reaction for production of diesel fuel hydrocarbons, Catalysis of Organic Reactions 115, (2006), 415-425, herein incorporated by reference in its entirety for all purposes. The deoxygenation reaction may be carried out in a fixed bed tubular reactor over a heterogeneous catalyst under elevated temperatures and pressures.

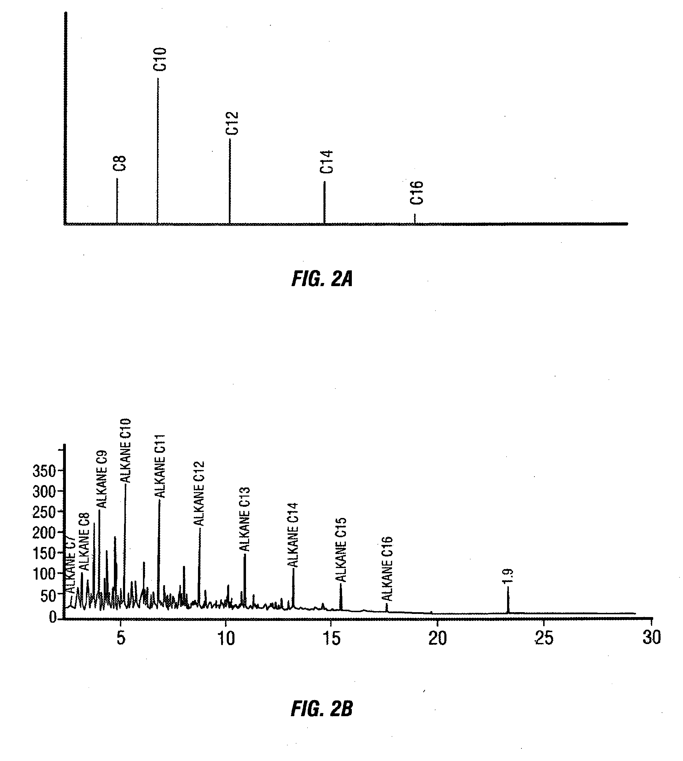

As shown in Figure 2, a specific type of jet fuel that may be produced by embodiments of the method is JP-8 jet fuel. This jet fuel comprises a mixture of primarily C8-C16 normal alkanes, with lesser amounts of other hydrocarbon compounds. The resulting product may comprise a mixture of primarily normal alkanes within the C8-C16 carbon number range and in appropriate proportion to be able to meet the MIL-DTL-83133E specification for JP-8, as shown in Figure 2 for example. In embodiments, the one or more hydrocarbons formed from the disclosed processes may be distilled to remove longer or shorter FA chains or hydrocarbon products thereof to meet specific fuel requirements. Any known distillation columns and techniques may be used in conjunction with the disclosed processes.

In addition to C8-C16 normal alkanes, the resulting jet fuel may comprise iso-alkanes, cyclo-alkanes, and alkyl-aromatic hydrocarbons. In a specific embodiment, the jet fuel may comprise the following composition: approximately 20% normal alkanes, about 40% iso-alkanes, about 20% cycloalkanes, and about 20% alkyl-aromatic hydrocarbons. Thus, in an embodiment, at least a portion of the one or more hydrocarbons produced from the fatty acids may be isomerized. The iso-alkanes required for jet fuel production may be prepared by isomerization of the normal alkanes via standard oil refining technologies employing commercially utilized catalyst. The isomerization may be achieved, for example, by use of platinum, palladium, silver, gold, copper, nickel, other transition metals, or other known catalysts on a suitable support. Heteropolyacids may also be employed as catalyst. The support may by mordenite, ferrierite, alumina silicate, or other support known in the art. The isomerization temperature may be in the range of 200°C to 300°C, with 240°C to 275°C being preferred, and 240°C being most preferred. The initial hydrogen pressure may be in the range of atmospheric to 10,000 psig, with 200 to 2000 psig being preferred, and 500-1200 psig being most preferred. The reactor may be of any type suitable for the intended purpose, including, but not limited to autoclave-type, and continuous tubular-type. The catalyst may be in the form of powder or shaped pellets.

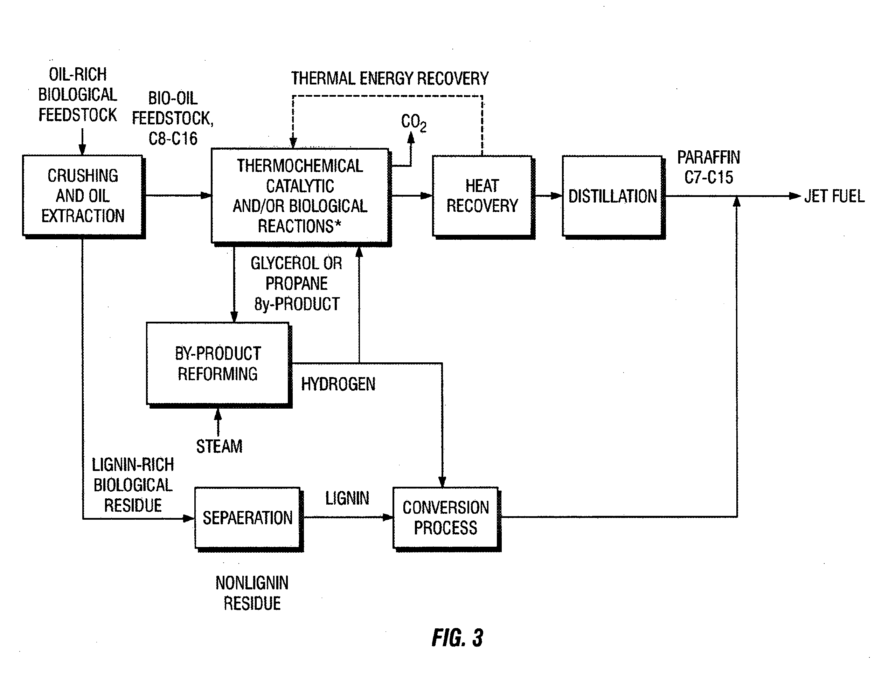

Jet fuel alkyl-aromatics typically comprise alkylbenzene compounds ranging in carbon number from C8 to C16 which may be prepared techniques known in the art such as described in U.S. Patent 4,229,602, incorporated herein by reference in its entirety for all purposes. Alternatively, aromatics can be provided by a variety of scenarios, one of which could involve the use of technologies for converting lignin (recoverable from cuphea and other biooil-containing seeds or husks or from other sources such as algaes) into jet fuel-quality alkylbenzene compounds. The cyclo-alkanes could be prepared from the alkyl-aromatics by art such as described in U.S. Patent 5,000,839, incorporated herein by reference in its entirety for all purposes. In addition, other sources of natural alkanes such as conventional fossil-basted fuels could be blended to make up a bio-fossil fuel blend. A full integrated scheme of an embodiment of the disclosed process for producing fuel-grade products is outlined in Figure 3.

Figure 3 illustrates a set of general process steps, some of which could be conducted via thermochemical-catalytic methods, biological (including enzyme-based, organism-based, or other biological) methods, or a combination of thermochemical catalytic and biological methods, which, when applied to a specific mixture of feedstock triglycerides, yields a fuel-grade product. As an example, in the method described above, the fatty acid source; thermochemical-catalytic, biological, and/or combination of thermochemical-catalytic and biological technologies; and reaction conditions utilized are appropriate for production of a fuel, such as a fuel that is able to meet the U.S. military MIL DTL-83133E specification for JP-8 jet fuel. Some examples of other jet fuels which may be produced by embodiments of the disclosed process include without limitation, JP-4, JP-5, JP-6, JP-7, JP-8, Jet Al, Jet A, Jet B, kerosene, Diesel 1, Diesel 2, Fuel Oil 1, Fuel Oil 2 or combinations thereof. Preferably, the jet fuel produced comprises at least about 10% hydrocarbons produced from the natural medium chain fatty acid source, preferably at least about 25%, more preferably at least about 50%. Of course, embodiments of the method may be applied to other types of fuels besides jet fuels.

To further illustrate various illustrative embodiments of the invention, the following example is provided.

### EXAMPLE

A suitable reactor containing reduced catalyst is heated to 300°C. A flow of hydrogen gas is initiated to the heated reactor at a pressure of 100 psig. The hydrogen flow is adjusted to be in excess of that required based upon biooil feed rate and minimum stoichiometric requirements. A natural fatty acid source such as a biological oil is pumped into the reactor while both temperature and hydrogen flow are maintained. The fatty acid source is contacted with the catalyst in the presence of hydrogen. The result is conversion of the fatty acid source to predominantly a normal hydrocarbon product. Some isomerization of the normal hydrocarbon may or may not occur, based upon both the catalyst and support employed. The product mixture is condensed by chilling the outlet line from the reactor and the product is collected in a receiver vessel. The crude product may be subjected to distillation, and the paraffinic product of appropriate boiling point range for jet fuel is recovered from the distillation process. The paraffinic product is subjected to isomerization catalyst and conditions in a suitable reactor. The resulting product is a crude product which may be subjected to a second distillation. The resulting product contains a mixture of normal and isomerized hydrocarbons useful as a jet fuel blend stock. Further processing, either by subjecting either the normal paraffin product or the isomerized product to aromatization and reduction conditions may provide aromatic and cycloparaffinic products useful as additional blendstocks for jet fuel. Appropriate combination of these blend stocks will provide a mixture useful as jet fuel. Alternatively, appropriate alkyl-aromatic components may be purchased and blended with the isomerized product. Alternatively, appropriate cycloparaffinic products may be blend with the isomerized and alkyl aromatic mixture, thus providing a mixture useful as jet fuel.

The discussion of a reference in the Description of the Related Art is not an admission that it is prior art to the invention, especially any reference that may have a publication date after the priority date of this application.

## Claims

1. A process for producing a jet fuel, the process comprising:
a) providing a fatty acid source comprising glycerides having one or more fatty acid groups, in which each fatty acid group has no more than 16 carbon atoms in the primary fatty acid chain;
b) cleaving the one or more fatty acid groups from the glycerides to form glycerol and one or more free fatty acids;
c) reducing glycerol to form propane, propanol, propanediol, or combinations thereof;
d) decarboxylating the one or more fatty acids to form one or more hydrocarbons; and
e) distilling the one or more hydrocarbons for the production of the jet fuel.

2. The process of claim 1 wherein the jet fuel comprises JP-4, JP-5, JP-6, JP-7, JP-8, Jet Al, Jet A, Jet B, kerosene.

3. The process of claim 1 wherein the one or more fatty acid groups are C6 to C16 fatty acid groups.

4. The process of claim 3 wherein the hydrocarbons are C5 to C16 hydrocarbons.

5. The process of claim 4 further comprising hydrogenating the hydrocarbons to form C5 to C16 alkanes.

6. The process of claim 5 further comprising treating the C5 to C16 alkanes to form an isoparaffinic jet fuel blendstock.

7. The process of claim 6 wherein the jet fuel comprises at least 50% by weight of the isoparaffinic jet fuel blendstock.

8. The process of claim 1 wherein the fatty acid source comprises natural oils, inclucting cuphea oil, coconut oil, palm oil, algae oil, coconut oil, palm oil, almond oil, canola oil, cocoa butter oil, corn oil, cotton seed oil, flaxseed oil, grape seed oil, olive oil, palm kernel, peanut oil, safflower oil, sesame oil, soybean oil, sunflower oil, walnut oil, or combinations thereof.

9. The process of claim 8 wherein the cuphea oil is derived from a Cuphea plant species, including Cuphea lanceolata, Cuphea carthagenensis, Cuphea epilobiifolia, Cuphea strigulosa, or combinations thereof.

10. The process of claim 8 wherein the process comprises cleaving the fatty acid groups from the glycerides in the oils by using a thermochemical catalytic process, a biological process, or an enzymatic process.

11. The process of claim 10 further comprising separating the one or more free fatty acids from the glycerol.

12. The process of claim 1 wherein the fatty acid source is decarboxylated and/or reduced by a thermochemical catalytic process, a biological process, or combinations thereof.

13. The process of claim 10 or 12 wherein the thermochemical catalytic process uses a catalyst, the catalyst comprising palladium, platinum, nickel, silver, gold, copper, cobalt-molybdenum, nickel-molybdenum, nickel-tungsten, nickel-cobalt, or combinations thereof.

14. The process of claim 1 further comprising distilling the one or more hydrocarbons to achieve a molecular weight distribution substantially similar to jet fuel.

15. The process of claim 1 further comprising forming cycloalkanes, alkylbenzene compounds, or combinations thereof from at least a portion of the hydrocarbons.

## Patentansprüche

1. Verfahren zum Herstellen eines Flugzeugtreibstoffs, wobei das Verfahren Folgendes umfasst:
a) Bereitstellen einer Fettsäurequelle, die Glyceride mit einer oder mehreren Fettsäuregruppen umfasst, wobei jede Fettsäuregruppe nicht mehr als 16 Kohlenstoffatome in der primären Fettsäurekette aufweist;
b) Abspalten der einen oder der mehreren Fettsäuregruppen von den Glyceriden, um Glycerin und eine oder mehrere freie Fettsäuren zu bilden;
c) Reduzieren von Glycerin, um Propan, Propanol, Propandiol oder Kombinationen davon zu bilden;
d) Decarboxylieren der einen oder der mehreren Fettsäuren, um ein oder mehrere Kohlenwasserstoffe zu bilden; und
e) Destillieren des einen oder der mehreren Kohlenwasserstoffe zur Herstellung des Flugzeugtreibstoffs.

2. Verfahren nach Anspruch 1, wobei der Flugzeugtreibstoff JP-4, JP-5, JP-6, JP-7, JP-8, Jet A-1, Jet A, Jet B, Kerosin umfasst.

3. Verfahren nach Anspruch 1, wobei die eine oder die mehreren Fettsäuregruppen C6- bis C16-Fettsäuregruppen sind.

4. Verfahren nach Anspruch 3, wobei die Kohlenwasserstoffe C5- bis C16-Kohlenwasserstoffe sind.

5. Verfahren nach Anspruch 4, das weiterhin das Hydrieren der Kohlenwasserstoffe umfasst, um C5- bis C16-Alkane zu bilden.

6. Verfahren nach Anspruch 5, das weiterhin das Behandeln der C5- bis C16-Alkane umfasst, um ein isoparaffinisches Flugzeugtreibstoffgemisch zu bilden.

7. Verfahren nach Anspruch 6, wobei der Flugzeugtreibstoff mindestens 50 Gew.-% des isoparaffinischen Flugzeugtreibstoffgemischs umfasst.

8. Verfahren nach Anspruch 1, wobei die Fettsäurequelle natürliche Öle umfasst, darunter Cupheaöl, Kokosöl, Palmöl, Algenöl, Kokosöl, Palmöl, Mandelöl, Rapsöl, Kakaobutteröl, Maisöl, Baumwollsamenöl, Leinsamenöl, Traubenkernöl, Olivenöl, Palmkernöl, Erdnussöl, Distelöl, Sesamöl, Sojaöl, Sonnenblumenöl, Walnussöl oder Kombinationen davon.

9. Verfahren nach Anspruch 8, wobei das Cupheaöl von einer Cupheapflanzenspezies stammt, darunter Cuphea lanceolata, Cuphea carthagenesis, Cuphea epilobiifolia, Cuphea strigulosa oder Kombinationen davon.

10. Verfahren nach Anspruch 8, wobei das Verfahren das Abspalten der Fettsäuregruppen von den Glyceriden in den Ölen durch Verwenden eines thermochemischen katalytischen Verfahrens, eines biologischen Verfahrens oder eines enzymatischen Verfahrens umfasst.

11. Verfahren nach Anspruch 10, das weiterhin das Trennen der einen oder der mehreren freien Fettsäuren von dem Glycerin umfasst.

12. Verfahren nach Anspruch 1, wobei die Fettsäurequelle durch ein thermochemisches katalytisches Verfahren, ein biologisches Verfahren oder Kombinationen davon decarboxyliert und/oder reduziert wird.

13. Verfahren nach Anspruch 10 oder 12, wobei das thermochemische katalytische Verfahren einen Katalysator verwendet, wobei der Katalysator Palladium, Platin, Nickel, Silber, Gold, Kupfer, Kobalt-Molybdän, Nickel-Molybdän, Nickel-Wolfram, Nickel-Kobalt oder Kombinationen davon umfasst.

14. Verfahren nach Anspruch 1, das weiterhin das Destillieren des einen oder der mehreren Kohlenwasserstoffe umfasst, um eine Molekulargewichtsverteilung zu erzielen, die im Wesentlichen Flugzeugtreibstoff ähnlich ist.

15. Verfahren nach Anspruch 1, das weiterhin das Bilden von Cycloalkanen, Alkylbenzolverbindungen oder Kombinationen davon aus mindestens einem Teil der Kohlenwasserstoffe umfasst.

## Revendications

1. Procédé pour la production de combustible pour moteur à réaction, le procédé comprenant :
a) la procuration d'une source d'acides gras comprenant des glycérides possédant au moins possédant un ou plusieurs groupes d'acides gras, chaque groupe d'acides gras ne contenant pas plus de 16 atomes de carbone dans la chaîne d'acides gras primaire ;
b) le clivage desdits un ou plusieurs groupes d'acides gras par rapport aux glycérides pour obtenir du glycérol et un ou plusieurs acides gras libres ;
c) la réduction du glycérol pour obtenir du propane, du propanol, du propanediol, ou leurs combinaisons ;
d) la décarboxylation desdits un ou plusieurs acides gras pour obtenir un ou plusieurs hydrocarbures ; et
e) la distillation desdits un ou plusieurs hydrocarbures pour la production du combustible pour moteur à réaction.

2. Procédé selon la revendication 1, dans lequel le combustible pour moteur à réaction comprend JP-4, JP-5, JP-6, JP-7, JP-8, Jet A1, Jet A, Jet B, du kérosène.

3. Procédé selon la revendication 1, dans lequel lesdits un ou plusieurs groupes d'acides gras représentent des groupes d'acides gras en C₆-C₁₆.

4. Procédé selon la revendication 3, dans lequel les hydrocarbures représentent des hydrocarbures en C₅-C₁₆.

5. Procédé selon la revendication 4, comprenant en outre l'hydrogénation des hydrocarbures pour obtenir des alcanes en C₅-C₁₆.

6. Procédé selon la revendication 5, comprenant en outre le traitement des alcanes en C₅-C₁₆ pour obtenir un mélange de base d'un combustible isoparaffinique pour moteur à réaction.

7. Procédé selon la revendication 6, dans lequel le combustible pour moteur à réaction comprend au moins 50 % en poids du mélange de base de base d'un combustible isoparaffinique pour moteur à réaction.

8. Procédé selon la revendication 1, dans lequel la source d'acides gras comprend des huiles naturelles, y compris l'huile de cuphéa, l'huile de noix de coco, l'huile de palme, l'huile d'algue, l'huile de noix de coco, l'huile de palme, l'huile d'amande, l'huile de colza, l'huile de beurre de cacao, l'huile de maïs, l'huile de semences de coton, l'huile de lin, l'huile de pépins de raisin, l'huile d'olive, l'huile de palmiste, l'huile d'arachide, l'huile de carthame, l'huile de sésame, l'huile de soja, l'huile de tournesol, l'huile de noix, ou leurs combinaisons.

9. Procédé selon la revendication 8, dans lequel l'huile de cuphéa dérive d'une espèce de plante cuphéa y compris Cuphea lanceolata, Cuphea carthagenensis, Cuphea epilobiifolia, Cuphea strigulosa, ou leurs combinaisons.

10. Procédé selon la revendication 8, dans lequel le procédé comprend le clivage des groupes d'acides gras par rapport aux glycérides dans les huiles en utilisant un procédé catalytique de type thermochimique, un procédé biologique ou un procédé enzymatique.

11. Procédé selon la revendication 10, comprenant en outre la séparation desdits un ou plusieurs acides gras libres par rapport au glycérol.

12. Procédé selon la revendication 1, dans lequel la source d'acides gras est soumise à une décarboxylation et/ou à une réduction via un procédé catalytique de type thermochimique, un procédé biologique, ou leurs combinaisons.

13. Procédé selon la revendication 10 ou 12, dans lequel le procédé catalytique de type thermochimique utilise un catalyseur, le catalyseur comprenant du palladium, du platine, du nickel, de l'argent, de l'or, du cuivre, du cobalt-molybdène, du nickel-molybdène, du nickel-tungstène, du nickel-cobalt, ou leurs combinaisons.

14. Procédé selon la revendication 1, comprenant en outre la distillation desdits un ou plusieurs hydrocarbures pour obtenir une distribution du poids moléculaire essentiellement similaire à celle d'un combustible pour moteur à réaction.

15. Procédé selon la revendication 1, comprenant en outre la formation de cycloalcanes, de composés d'alkylbenzènes ou de leurs combinaisons à partir d'au moins une portion des hydrocarbures.
